# EUROPEAN PATENT SPECIFICATION

(11) **EP 3 160 186 B1**
(45) Date of publication and mention of the grant of the patent: **02.01.2019**
(21) Application number: 15809334.4
(22) Date of filing: 27.05.2015
(51) Int. Cl.: H04W 36/38, H04W 16/28, H04W 24/10, H04W 36/30, H04W 56/00, H04W 88/08

(54) **BASE STATION, CONTROL STATION, AND HANDOVER METHOD**
BASISSTATION, STEUERSTATION UND ÜBERGABEVERFAHREN
STATION DE BASE, STATION DE COMMANDE ET PROCÉDÉ DE TRANSFERT INTERCELLULAIRE

(30) Priority: 19.06.2014 JP 2014126362
(43) Date of publication of application: 26.04.2017
(73) Proprietor: Mitsubishi Electric Corporation, Chiyoda-ku Tokyo 100-8310 (JP)
(72) Inventor: FUKUI, Noriyuki, Tokyo 100-8310 (JP); TAKE, Keijiro, Tokyo 100-8310 (JP)
(74) Representative: Pfenning, Meinig & Partner mbB
(86) International application number: PCT/JP2015/065243
(87) International publication number: WO 2015/194338

(56) References cited:
- EP-A1- 1 740 007
- EP-A1- 2 677 797
- WO-A1-01/01720
- WO-A1-99/33304
- WO-A1-2010/109591
- WO-A2-97/31487
- JP-A- H09 322 222
- JP-A- H10 503 912
- JP-A- 2002 077 025
- JP-A- 2008 258 937
- JP-A- 2010 503 365
- JP-A- 2011 055 273
- US-A1- 2005 070 285
- US-A1- 2013 308 473
- US-A1- 2014 073 329

## Description

### Field

The present invention relates to a base station of a wireless communication system, a control station that controls the base station, and a handover method.

### Background

There is a technology in which, when a base station and a terminal perform communication, the base station forms beams only in a direction of a communication target terminal (beam forming) and transmits signals using a plurality of antennas. When this technology is used, directions in which radio signals are transmitted are narrowed down, and thus it is possible to prevent or reduce interference with other terminals present in other places. By transmitting the signals in the specific direction, it is possible to concentrate transmission power, as compared with the case where signals are transmitted to an entire service area. This leads to expansion of the service area. The beam forming can be applied when the base station receives signals from the terminal. That is, a reception antenna of the base station has a direction for receiving signals, such that the influence of interference waves arriving from other directions is prevented or reduced.

Patent Literature 1 discloses an invention of a method of performing handover (switching of a partner base station with which a terminal performs communication) in a system using the beam forming technology. In the invention described in Patent Literature 1, when a trigger of the handover occurs, the terminal transmits a sounding pulse using an omnidirectional antenna and a plurality of base stations around the terminal receive the sounding pulse. Thereafter, the terminal selects one station out of the base stations that have received the sounding pulse. The selected base station forms beams toward a position where the terminal is present. The selection of the base station is performed, for example, on the basis of signal intensity. When the base station forms the beams toward the position where the terminal is present, a wireless network controller estimates the position where the terminal is present, for example, from reception results of the sounding pulse in the base stations. Alternatively, the terminal notifies the base station of the position by transmitting the sounding pulse carrying position information. The handover is executed on the occurrence of a trigger such as when the terminal detects that a power level of a signal received from a communicating base station falls below a predefined value or when the terminal cyclically monitors signals transmitted from the peripheral base stations and detects that the signals can be received.

WO 97/31487A discloses that a base station controller (BSC) commands neighbouring base stations (BTS2, BTS3) to measure the level and/or quality of the uplink signal of the mobile station (MS), when the serving base station (BTS1) has measured an uplink signal level and/or quality lower than a predetermined triggering value.

### Citation List

### Patent Literature

Patent Literature 1: Japanese Translation of International Patent Application No. 2006-500873

### Summary

### Technical Problem

In the invention described in Patent Literature 1, the terminal follows a procedure for explicitly transmitting a sounding pulse on the occurrence of the handover trigger and performing selection of a base station at a handover destination in accordance with the reception result on a base station side. Therefore, there is a problem in that, while the terminal is executing the procedure, the communication of the terminal is stopped.

In the estimation of a terminal position, reception information on the sounding pulse in a plurality of base stations is used. However, a plurality of the base stations that can receive the sounding pulse are not always present for the handover. Therefore, there is a problem in that the position of the terminal cannot be estimated when there is only one base station that can receive the sounding pulse. A method of carrying position information on the terminal onto the sounding pulse is also disclosed. However, in that case, an information amount of the sounding pulse increases. As a result, there is a problem in that radio resources are uselessly consumed and radio resources allocated to other communicating terminals decreases.

As the trigger of the handover, a signal reception result of the terminal (quality deterioration of a received signal from the communicating base station or signal reception from the peripheral base stations) is used. However, this is not always appropriate when the beam forming is performed. In the beam forming, a high transmission gain can be obtained by using a large number of antenna elements, and a fixed signal level is obtained irrespective of the distances between the base stations and the terminal. That is, signal deterioration is less easily detected. However, because there is an upper limit in the transmission gain, the signal level suddenly decreases in the terminal when the terminal moves to some degree away from the base stations. Alternatively, when the base stations are simultaneously transmitting signals to other terminals, it is also conceivable that transmission power that can be distributed to a terminal that is about to carry out the handover changes depending on the number of the terminals. When the above is taken into account, in some case, it is possible to more appropriately determine, on the basis of information grasped on the base station side, whether the terminal should perform the handover.

The present invention has been devised in view of the above and an object of the present invention is to obtain a base station, a control station, and a handover method capable of avoiding a stop of communication of a terminal during execution of handover.

### Solution to Problem

The present invention is as defined in the appended independent claims. Further implementations are disclosed in the description and the figures of the present application. To solve the above problem and achieve the above object, the present invention provides a base station of a wireless communication system including a plurality of base stations and a control station that controls the base stations, the base station comprising: an antenna unit that forms a transmission beam and a reception beam; a transmitting and receiving unit that measures, when other base stations determine that a terminal communicating with the other base stations around the own station needs to perform handover, signals transmitted to the other base stations by a handover target terminal, the handover target terminal being a terminal determined to need to carry out the handover; and a control unit that notifies the control station of measurement results of the signals as information referred to when the control station determines a handover destination of the handover target terminal.

### Advantageous Effects of Invention

According to the present invention, there is an effect that it is possible to avoid a stop of the communication between the terminal and the base station during execution of the handover.

The invention is set out in the appended set of claims. The embodiments and/or examples of the following description which are not covered by the appended claims are considered as not being part of the present invention.

### Brief Description of Drawings

FIG. 1 is a diagram showing a configuration example of a wireless communication system applying the present invention.
FIG. 2 is a diagram showing a configuration example of a base station.
FIG. 3 is a flowchart showing an operation example of an arriving-direction estimating unit.
FIG. 4 is a flowchart showing an operation example of a control unit.
FIG. 5 is a diagram showing an example of a hardware configuration that realizes the base station.
FIG. 6 is a diagram showing a configuration example of a control station.
FIG. 7 is a flowchart showing an operation example of a handover-destination determining unit.
FIG. 8 is a flowchart showing an operation example of a handover control unit.
FIG. 9 is a diagram showing an example of a hardware configuration that realizes the control station.
FIG. 10 is a diagram showing an example of beam formation by the base station.
FIG. 11 is a diagram for explaining an error between the direction of a handover source base station and the direction of a terminal.
FIG. 12 is a diagram showing a method for measuring the distance between the terminal and the handover source base station.
FIG. 13 is a diagram showing an example of a method in which the base station detects a signal from the terminal.
FIG. 14 is a diagram showing an example of a method in which the base station detects a signal from the terminal.
FIG. 15 is a diagram showing an example of a method in which the base station detects a signal from the terminal using a plurality of reception beams simultaneously.
FIG. 16 is a diagram showing an example of a method in which the base station detects a signal from the terminal using a plurality of reception beams simultaneously.

### Description of Embodiment

An embodiment of a base station, a control station, and a handover method according to the present invention is explained in detail below with reference to the drawings. Note that the present invention is not limited by the embodiment.

### Embodiment

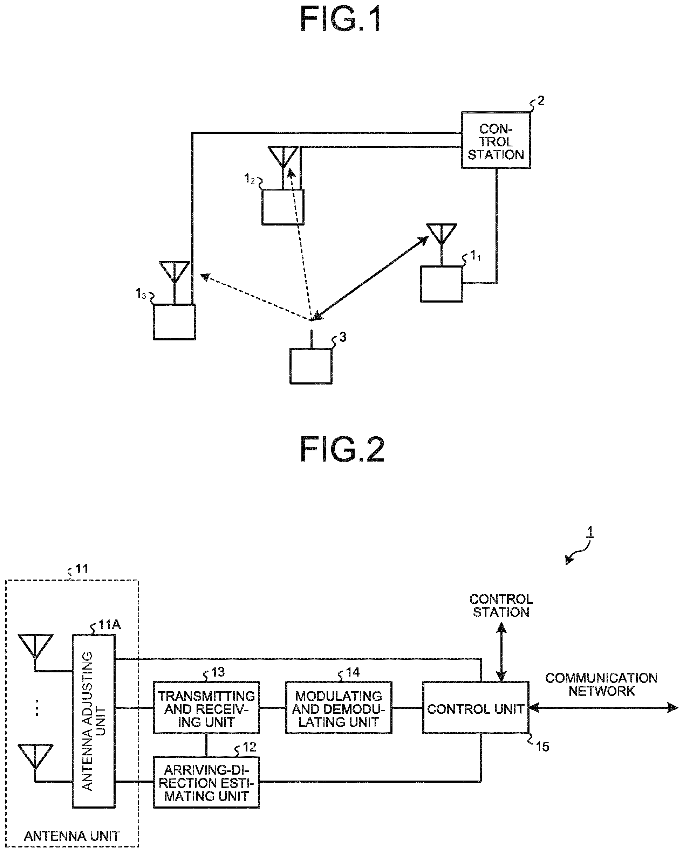

FIG. 1 is a diagram showing a configuration example of a wireless communication system applying the present invention. The wireless communication system in this embodiment includes base stations 1₁, 1₂, and 1₃ capable of communicating with a terminal 3 and a control station 2 that controls the base stations 1₁, 1₂, and 1₃. In the example shown in FIG. 1, a state in which the base station 1₁ and the terminal 3 are communicating with each other is shown. The base stations 1₁, 1₂, and 1₃ are configured to be capable of forming beams toward a communication partner such as the terminal 3 and transmitting and receiving signals. The base stations are connected to the control station 2 via communication lines. It is assumed that the base stations 1₂ and 1₃ are located in a range in which signals transmitted by the terminal 3 can reach the base stations 1₂ and 1₃.

Note that, in FIG. 1, an example is shown in which the number of base stations is three. However, the number of base stations can be four or more. In the following explanation, when it is unnecessary to distinguish the base stations 1₁, 1₂, and 1₃ and matters (an apparatus configuration, an operation, and the like) common to the base stations are explained, the base stations 1₁ to 1₃ are collectively described as base station 1.

A handover operation in the wireless communication system having the configuration shown in FIG. 1 is briefly explained. As an example, an operation of the terminal 3 in performing handover from the base station 1₁ to the base station 1₂ is explained.

In the wireless communication system shown in FIG. 1, the terminal 3 is performing communication with the base station 1₁. When a handover trigger occurs in this state, that is, when the base station 1₁ determines that it is necessary to cause the terminal 3 to execute handover and start communication with the other base stations, the control station 2 instructs the base stations 1₂ and 1₃ located around the base station 1₁ communicating with the terminal 3 to start reception of signals transmitted by the terminal 3. The base stations 1₂ and 1₃, which receive the reception instruction from the control station 2, execute a reception operation for the signals transmitted from the terminal 3. At this point, the control station 2 notifies the base stations 1₂ and 1₃ of a signal transmission timing of the terminal 3 and transmitted signal information on the terminal 3. The transmitted signal information is information necessary for distinguishing signals transmitted by not-shown other terminals and the signals transmitted by the terminal 3. The transmitted signal information is, for example, a terminal ID, a bit pattern peculiar to the terminal 3, and a specific signal pattern (e.g., a Reference signal sequence used in LTE (Long Term Evolution)). In the following explanation, it is assumed that the "transmitted signal information" indicates the terminal ID, the bit pattern, the signal pattern, and the like. Note that the signal transmission timing is a timing when the terminal 3 transmits signals.

The base stations 1₂ and 1₃ perform signal reception on the basis of the signal transmission timing of the terminal 3 and the transmitted signal information on the terminal 3 notified from the control station 2. At this point, the base stations 1₂ and 1₃ also perform estimation of an arriving direction of signals. The base stations 1₂ and 1₃ report, for example, signal intensities to the control station 2 as reception results of the signals transmitted from the terminal 3. Instead of the signal intensities, SNRs (Signal to Noise power Ratios) or SINRs (Signal to Interference plus Noise power Ratios) may be reported. Besides, any information indicating a reception state of signals having values which vary according to a change in an arriving direction of the signals (a relation between the arriving direction and a forming direction of beams), can be used.

The control station 2 selects a handover destination base station out of a plurality of the base stations 1 that report the reception results of the signals transmitted from the terminal 3 that performs handover. The control station 2 selects the handover destination base station by comparing the reports (the signal intensities, etc.) received from the base stations 1. For example, when the reports on the signal intensities are received from the respective base stations 1, the control station 2 selects the base station 1 having the highest signal intensity as the handover destination base station. In this example, the control station 2 selects the base station 1₂. Subsequently, the control station 2 instructs the selected base station 1₂ to perform preparation for the handover and instructs the terminal 3 and the base station 1₁ communicating with the terminal 3 to execute the handover. Note that the control station 2 performs the instruction to the terminal 3 through the base station 1₁.

The base station 1₂, which has received the instruction for the handover preparation from the control station 2, forms beams in the estimated arriving direction (an arriving direction of the signal transmitted from the terminal 3) and transmits a downlink synchronization signal. To receive an uplink signal (hereinafter referred to as uplink synchronization signal) of the terminal 3 that performs the handover, the base station 1₂ forms reception beams. It is assumed that the beam width at this point is the same as the beam width formed during data transmission and reception.

FIG. 2 is a diagram showing a configuration example of the base station 1. The base station 1 includes an antenna unit 11, an arriving-direction estimating unit 12, a transmitting and receiving unit 13, a modulating and demodulating unit 14, and a control unit 15.

The antenna unit 11 includes a plurality of antennas and an antenna adjusting unit 11A that adjusts the antennas to form beams. The antenna adjusting unit 11A is an electronic circuit that performs beam forming by, for example, adjusting the amplitudes and phases of signals transmitted and received by the respective antennas. The antenna adjusting unit 11A is made by a DSP (Digital Signal Processor), an ASIC (Application Specific Integrated Circuit), an FPGA (Field Programmable Gate Array), or the like. The antenna unit 11 receives an instruction of the control unit 15, forms transmission beams in an instructed direction, and performs transmission of signals passed from the transmitting and receiving unit 13. The antenna unit 11 forms reception beams in a direction instructed by the control unit 15 and performs signal reception. When an arriving-direction estimating unit 12 explained below estimates an arriving direction, the antenna unit 11 scans, with the reception beams, a fixed range directed to the direction of a reception target.

The arriving-direction estimating unit 12 estimates, on the basis of signal reception results obtained while the antenna unit 11 is scanning the range of direction of the reception target with the reception beams, an arriving direction of signals transmitted by the terminal 3 that performs the handover (the terminal 3 communicating with the other base stations). The estimated arriving direction is reported to the control unit 15. The control unit 15 updates the arriving direction to the latest information and stores the arriving direction. Even in a state in which the terminal 3 that performs the handover is absent in the periphery, when the terminal 3 communicating with the own base station is present, the arriving-direction estimating unit 12 performs beam tracking, which is an operation of estimating an arriving direction of signals transmitted by a communicating terminal.

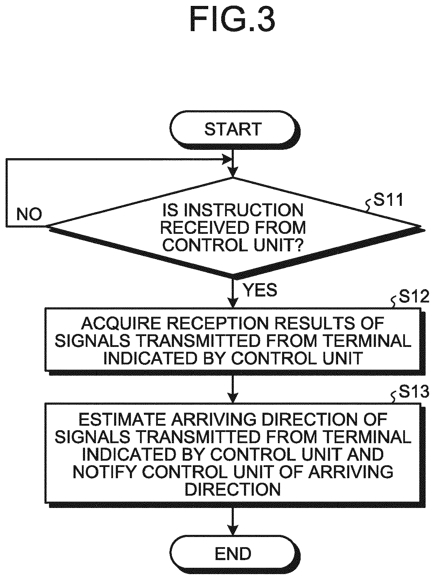

The operation of the arriving-direction estimating unit 12 is explained with reference to a flowchart. FIG. 3 is a flowchart showing an operation example of the arriving-direction estimating unit 12.

The arriving-direction estimating unit 12 checks whether an instruction to estimate an arriving direction of signals transmitted from the terminal is received from the control unit 15 (step S11). When the instruction is not received (No at step S11), the arriving-direction estimating unit 12 repeats the processing at step S11. It is assumed that the instruction to estimate the arriving direction includes information for identifying a signal of an estimation target, specifically, the same information as the transmitted signal information explained above. When the instruction is received from the control unit 15 (Yes at step S11), the arriving-direction estimating unit 12 acquires, from the transmitting and receiving unit 13, reception results of the signals transmitted from the terminal 3 indicated by the instruction from the control unit 15 (step S12). The reception results of the signals are information indicating reception quality of the signals. The reception results acquired by the arriving-direction estimating unit 12 at step S12 are reception results in respective reception beams formed by the antenna unit 11 as the antenna unit 11 changes a direction. For example, the arriving-direction estimating unit 12 acquires respective reception results obtained when the antenna unit 11 switches, by a fixed amount, a direction of the reception beams at a fixed cycle within a certain range and the transmitting and receiving unit 13 performs reception processing at respective cycles, that is, in respective directions.

Subsequently, the arriving-direction estimating unit 12 estimates, on the basis of the acquired reception results, that is, the reception results of the signals received in the reception beams in different directions by the antenna unit 11 and the transmitting and receiving unit 13 as the antenna unit 11 and the transmitting and receiving unit 13 switch the direction of the reception beams, an arriving direction of the signals transmitted from the terminal 3 indicated by the instruction from the control unit 15 and notifies the control unit 15 of the estimation result (step S13). When the reception results acquired at step S12 are signal intensities, the arriving-direction estimating unit 12 determines, as the arriving direction of the signals, the direction corresponding to the reception result indicating the largest value.

In this way, when receiving the instruction from the control unit 15, the arriving-direction estimating unit 12 estimates, on the basis of the reception results of the signals in the transmitting and receiving unit 13, the arriving direction of the signals transmitted by the instructed terminal 3. The estimation result is notified to the control unit 15.

When transmitting signals to the terminal 3, the transmitting and receiving unit 13 converts a baseband signal, passed from the modulating and demodulating unit 14, from digital into analog and up-converts the converted baseband signal into a radio frequency signal. Conversely, when receiving signals from the terminal 3, the transmitting and receiving unit 13 down-converts a radio frequency signal into a baseband signal and converts the baseband signal from analog into digital. The transmitting and receiving unit 13 measures signal intensities and signal reception quality such as SNRs or SINRs.

The modulating and demodulating unit 14 performs modulation and demodulation of signals.

The control unit 15 stores information concerning the arriving direction reported from the arriving-direction estimating unit 12. The control unit 15 performs control and adjustment of the signal transmission and reception timing of the entire base station. The control unit 15 includes an interface with a communication network to carry out transmission and reception of data. Further, the control unit 15 includes an interface with the control station 2 and makes a handover trigger, such that, when the terminal 3 for which handover is necessary is present among communicating terminals 3, the control unit 15 transmits, to the control station 2, the transmitted signal information (explained above) for distinguishing signals from the terminal 3 for which handover is necessary and the information concerning the signal transmission timing. It is assumed that the control unit 15 retains position information indicating a place where the own base station is set.

When transmitting a data signal to a communication partner terminal 3, the control unit 15 sends the modulating and demodulating unit 14 data to be modulated, and gives arriving direction information on the communication partner terminal 3 to the antenna unit 11 to indicate a direction in which transmission beams are directed. The arriving direction information indicates an arriving direction of signals transmitted by the communication partner terminal 3. When receiving a data signal from the communication partner terminal 3, the control unit 15 also gives the antenna unit 11 the arriving direction information on the communication partner terminal 3 to indicate a direction in which reception beams are directed. On the other hand, when receiving from the control station 2 an instruction to receive an uplink signal of a certain terminal 3, the control unit 15 instructs the antenna unit 11, the arriving-direction estimating unit 12, and the modulating and demodulating unit 14 to receive the uplink signal in accordance with the transmitted signal information and the information concerning the signal transmission timing notified when the control unit 15 receives the instruction. Note that the signals to be received are signals transmitted from the terminal 3 for which handover is determined as necessary in the peripheral other base stations.

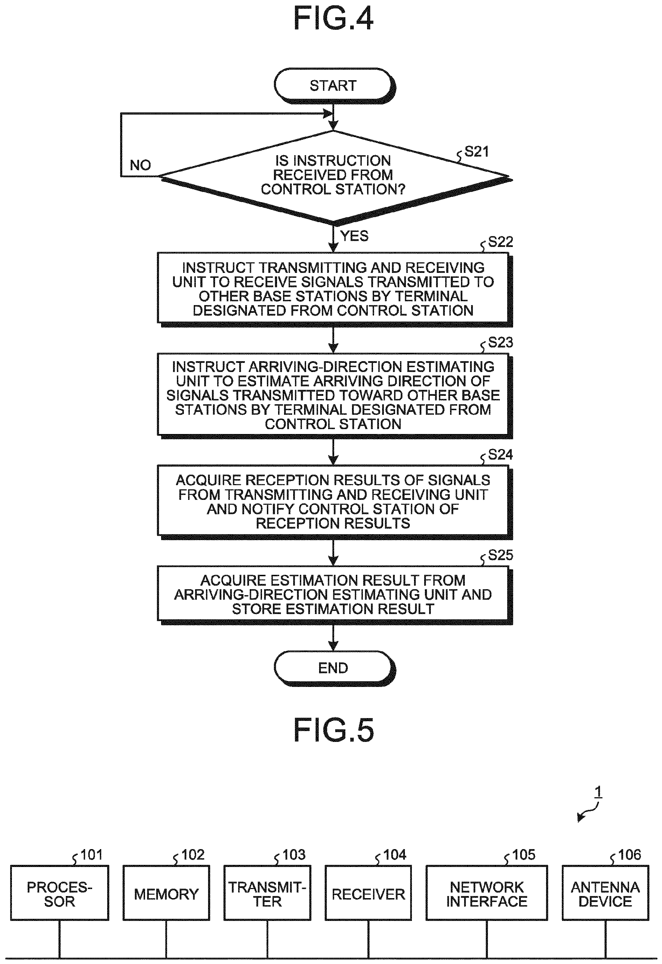

The operation of the control unit 15 is explained with reference to a flowchart. FIG. 4 is a flowchart showing an operation example of the control unit 15.

The control unit 15 checks whether an instruction to receive signals transmitted from the terminal 3 communicating with the other base stations is received from the control station 2 (step S21). When the instruction is not received (No at step S21), the control unit 15 repeats the processing at step S21. When the instruction is received from the control station 2 (Yes at step S21), the control unit 15 instructs the transmitting and receiving unit 13 to receive signals transmitted to the other base stations by the terminal 3 designated from the control station 2 (step S22). Subsequently, the control unit 15 instructs the arriving-direction estimating unit 12 to estimate an arriving direction of the signals transmitted to the other base stations by the terminal 3 designated from the control station 2 (step S23). Note that the execution order of steps S22 and S23 can be opposite. Thereafter, the control unit 15 acquires, from the transmitting and receiving unit 13, reception results of the signals transmitted to the other base station by the terminal 3 designated from the control station 2 and notifies the control station 2 of the reception results (step S24). The control unit 15 acquires, from the arriving-direction estimating unit 12, estimation results of an arriving direction of the signals transmitted to the other base stations by the terminal 3 designated from the control station 2 and stores the estimation results (step S25). Note that the execution order of steps S24 and S25 can be changed.

FIG. 5 is a diagram showing an example of a hardware configuration that realizes the base station 1. The base station 1 is realized by, for example, a processor 101, a memory 102, a transmitter 103, a receiver 104, a network interface 105, and an antenna device 106 shown in FIG. 5. The processor 101 is a CPU (Central Processing Unit; also referred to as central processing device, processing device, arithmetic device, microprocessor, microcomputer, processor, and DSP), a system LSI (Large Scale Integration), or the like. The memory 102 is a nonvolatile or volatile semiconductor memory such as a RAM (Random Access Memory), a ROM (Read Only Memory), a flash memory, an EPROM (Erasable Programmable Read Only Memory), or an EEPROM (Electrically Erasable Programmable Read Only Memory), a magnetic disk, a flexible disk, an optical disk, a compact disk, a minidisk, a DVD (Digital Versatile Disc), or the like.

The arriving-direction estimating unit 12 and the control unit 15 of the base station 1 are realized by the processor 101 and a program stored in the memory 102. Specifically, the arriving-direction estimating unit 12 and the control unit 15 are realized by the processor 101 reading out a program operating as the units from the memory 102 and executing the program.

The transmitting and receiving unit 13 and the modulating and demodulating unit 14 are realized by the transmitter 103 and the receiver 104. That is, transmission processing in the transmitting and receiving unit 13 and modulation processing in the modulating and demodulating unit 14 are carried out in the transmitter 103. Reception processing in the transmitting and receiving unit 13 and demodulation processing in the modulating and demodulating unit 14 are carried out in the receiver 104. The antenna unit 11 is realized by the antenna device 106. Note that the network interface 105 shown in FIG. 5 is used when the control unit 15 shown in FIG. 2 communicates with the control station 2 and when the control unit 15 communicates with the communication network.

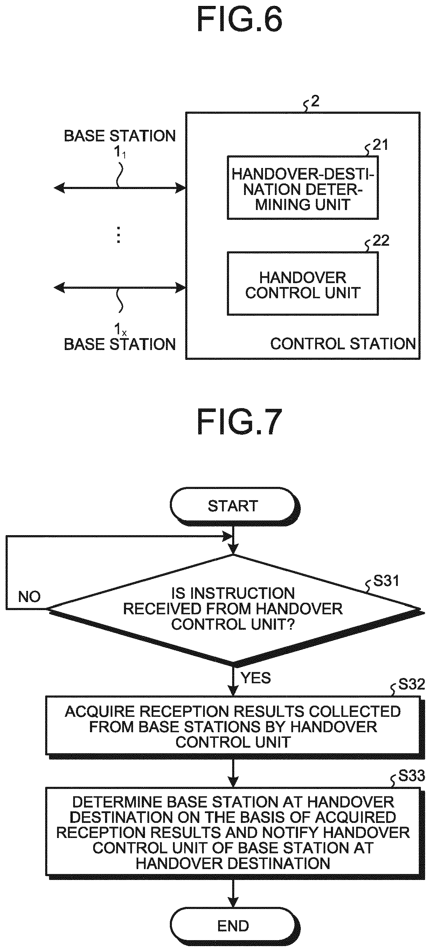

FIG. 6 is a diagram showing a configuration example of the control station 2. The control station 2 includes a handover-destination determining unit 21 and a handover control unit 22. The control station 2 includes a plurality of interfaces with the base stations.

The handover-destination determining unit 21 determines the base station 1 at a handover destination when the terminal 3 communicating with a certain base station 1 executes handover.

The operation of the handover-destination determining unit 21 is explained with reference to a flowchart. FIG. 7 is a flowchart showing an operation example of the handover-destination determining unit 21.

The handover-destination determining unit 21 checks whether an instruction to determine a handover destination of the terminal 3 for which handover is necessary is received from the handover control unit 22 (step S31). When the instruction is not received (No at step S31), the handover-destination determining unit 21 repeats the processing at step S31. When the instruction is received from the handover control unit 22 (Yes at step S31), the handover-destination determining unit 21 acquires reception results collected by the handover control unit 22 from the base stations 1, which are candidates of the handover destination of the terminal 3 (step S32). As explained in detail below, when detecting the terminal 3 for which handover is necessary, the handover control unit 22 treats, as the handover destination candidates of the terminal 3, the base stations 1 present around the base station 1 communicating with the terminal 3. The handover control unit 22 causes the handover destination candidate base stations to receive signals transmitted by the terminal 3 to the communicating base station, and collects reception results of the signals from the handover destination candidate base stations. For example, in the case of the example shown in FIG. 1, the terminal 3 is communicating with the base station 1₁. The handover destination candidates when the handover of the terminal 3 is necessary are the base stations 1₂ and 1₃. At step S32, the handover-destination determining unit 21 acquires the reception results collected from the handover destination candidate base stations by the handover control unit 22.

Subsequently, the handover-destination determining unit 21 determines the base station 1 at a handover destination of the terminal 3 on the basis of the reception results acquired at step S32 and notifies the handover control unit 22 of the determination result (step S33). At step S33, when the reception results acquired at step S32 are, for example, signal intensities, the handover-destination determining unit 21 compares the reception results to each other and determines, as a handover destination, the base station 1 corresponding to the reception result indicating the highest signal intensity.

The handover control unit 22 instructs the base stations 1 to execute various kinds of processing necessary for realizing the handover of the terminal 3. It is assumed that the handover control unit 22 retains position information indicating setting places of the respective base stations 1 configuring the wireless communication system.

In the control station 2 shown in FIG. 6, when the terminal 3 for which handover is necessary (hereinafter referred to as handover target terminal) is detected in a certain base station 1, the handover control unit 22 receives notification indicating to that effect from this base station 1 (hereinafter referred to as handover source base station) and receives the signal transmission timing of and transmitted signal information on signals transmitted by the handover target terminal. The handover control unit 22 passes, to the base stations 1 (hereinafter referred to as handover destination candidate base stations) around the base station 1 (the handover source base station) with which the handover target terminal is communicating, the signal transmission timing of and the transmitted signal information on the signals transmitted by the handover target terminal and instructs the handover destination candidate base stations to receive the signals transmitted by the handover target terminal. Note that it is assumed that one or more handover destination candidate base stations are selected on the basis of, for example, distances from the handover source base station. When receiving the reception results of target signals (the signals transmitted by the handover target terminal) from the respective handover destination candidate base stations, the handover control unit 22 passes the reception results to the handover-destination determining unit 21. The handover-destination determining unit 21 selects, from the received information (the reception results), a base station appropriate as the handover destination using the reference explained above. When the selection of the base station at the handover destination by the handover-destination determining unit 21 ends, the handover control unit 22 instructs the base station selected as the handover destination (hereinafter referred to as handover destination base station) to transmit a downlink synchronization signal and receive an uplink synchronization signal for the handover target terminal, and causes the handover destination base station to prepare for the handover. The handover control unit 22 instructs the handover target terminal and the handover source base station to carry out the handover. The handover control unit 22 transmits, to the handover target terminal, the information necessary for the handover such as an ID of the handover destination base station.

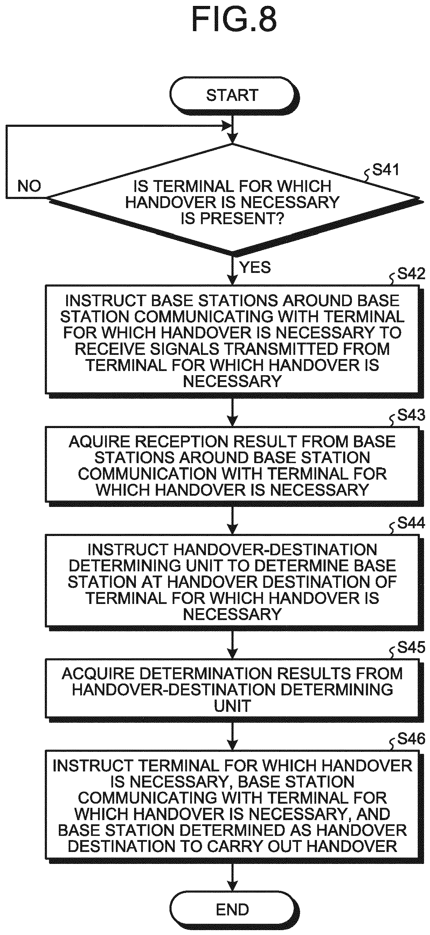

The operation of the handover control unit 22 is explained with reference to a flowchart. FIG. 8 is a flowchart showing an operation example of the handover control unit 22.

The handover control unit 22 checks whether the terminal 3 for which handover is necessary is present (step S41). When the terminal 3 for which handover is necessary is absent (No at step S41), the handover control unit 22 repeats the processing at step S41. When the terminal 3 for which handover is necessary is present (Yes at step S41), the handover control unit 22 instructs the base stations 1 around the base station 1 communicating with the terminal 3 for which handover is necessary, to receive signals transmitted from the terminal 3 for which handover is necessary (step S42). For example, in the case of the example shown in FIG. 1, the terminal 3 is communicating with the base station 1₁. When the handover of the terminal 3 is necessary, the handover control unit 22 instructs the base stations 1₂ and 1₃ to receive signals transmitted from the terminal 3.

The handover control unit 22 acquires the reception results of the signals transmitted by the terminal 3, from the base stations 1 around the base station 1 communicating with the terminal 3 for which handover is necessary (step S43). The handover control unit 22 instructs the handover-destination determining unit 21 to determine a handover destination of the terminal 3 for which handover is necessary (step S44).

Thereafter, when receiving from the handover-destination determining unit 21 the determination result, that is, the information concerning the base station at the handover destination of the terminal 3 for which handover is necessary (step S45), the handover control unit 22 instructs the terminal 3 for which handover is necessary, the base station 1 communicating with the terminal 3 for which handover is necessary, and the base station 1 at the handover destination of the terminal 3 for which handover is necessary, to carry out the handover (step S46).

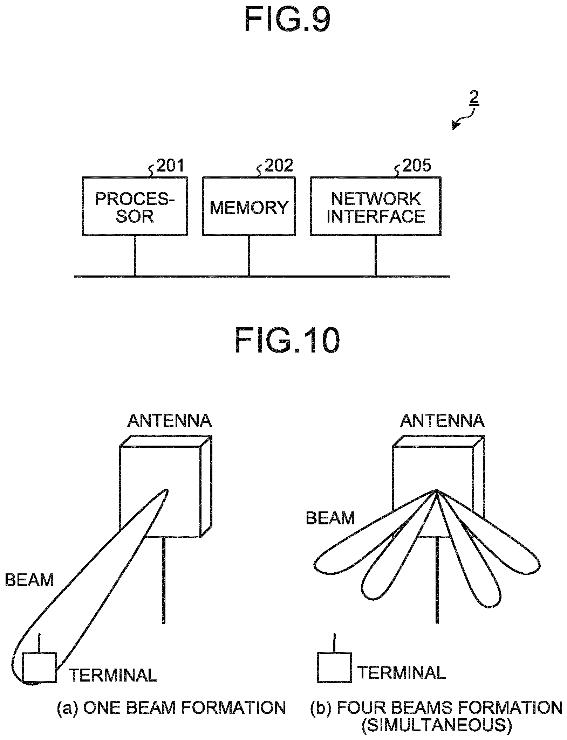

FIG. 9 is a diagram showing an example of a hardware configuration that realizes the control station 2. The control station 2 is realized by, for example, a processor 201, a memory 202, and a network interface 205. These devices are the same as the processor 101, the memory 102, and the network interface 105 shown in FIG. 5.

The handover-destination determining unit 21 and the handover control unit 22 of the control station 2 are realized by the processor 201 and the program stored in the memory 202. Specifically, the handover-destination determining unit 21 and the handover control unit 22 of the control station 2 are realized by the processor 201 reading out a program for operating as the units from the memory 202 and executing the program. Note that the network interface 205 shown in FIG. 9 is used when the handover control unit 22 shown in FIG. 5 communicates with the base stations 1₁ to 1₃.

The operation during the handover is explained again. The base station 1 communicating with the terminal 3 is performing the signal transmission and reception using an arriving direction estimated so far, and performing update of arriving direction information in accordance with movement of the terminal 3. The base station 1 adjusts, in accordance with the update of the arriving direction information, a direction in which beams are directed, where necessary. The base station 1 is determining whether it is necessary to perform the handover in a state in which the base station 1 is communicating with the terminal 3. When conditions determined in advance are satisfied, the base station 1 determines that the handover is necessary. Determination conditions for the handover are separately explained. When determining that the handover is necessary, the base station 1 continues the communication with the terminal 3 while notifying the control station 2 of the necessity of the handover and the timing when the handover target terminal, which is the terminal for which handover is necessary, transmits signals (the signal transmission timing of the handover target terminal) and the transmitted signal information (explained above).

The control station 2, which has received the notification to the effect that the handover is necessary, notifies the handover destination candidate base stations, that is, the base stations located around the handover source base station that is the base station 1 at a notification source, of the signal transmission timing and the transmitted signal information and the position information on the handover source base station and instructs the handover destination candidate base stations to receive signals of the handover target terminal. The signal transmission timing and the transmitted signal information of which the control station 2 notifies the handover destination candidate base stations are the signal transmission timing and the transmitted signal information of which the handover source base station has notified the control station 2.

The respective handover destination candidate base stations, which have received the instructions to receive the signal of the handover target terminal, receive the signals transmitted from the handover target terminal in accordance with the signal transmission timing of and the transmitted signal information on the handover target terminal, which are notified by the control station 2. At this point, the reception beams perform scanning in a range (±θ) of a certain angle centering on a direction of a position indicated by the position information on the handover source base station notified by the control station 2. The direction of the handover source base station is calculated on the basis of the position information on the handover source base station and position information on the own base station. When detecting signals during the scanning, the handover destination candidate base stations perform the arriving direction estimation on the basis of the results of the signal detection, store the information concerning the arriving direction, and report the signal intensities of the detected signals to the control station 2 as the signal reception results.

When receiving the report of the signal reception results from the handover destination candidate base stations, the control station 2 selects a handover destination base station on the basis of the reported signal reception results. The control station 2 instructs the selected handover destination base station to perform the handover preparation. Specifically, the control station 2 instructs the handover destination base station to receive the uplink synchronization signal and transmit the downlink synchronization signal for the handover target terminal.

The handover destination base station, which is the handover destination candidate base station that has received the instruction to perform the handover preparation, starts the downlink synchronization signal transmission and the uplink synchronization signal reception. The beams formed at this point are directed in the stored arriving direction, that is, the arriving direction estimated on the basis of the reception results of the signals transmitted from the handover target terminal.

Determination conditions for handover are explained. The base station 1 communicating with the terminal 3 forms beams to perform the communication. The base station 1 forms the beams using a plurality of antenna elements. As the number of antenna elements in use is larger, a transmission gain increases and a signal reaching distance increases. An upper limit of the number of antenna elements in use depends on the number of antenna elements included in the base station 1 and also depends on the number of terminals 3 communicating with the base station 1 at the same timing. Therefore, for example, when the terminal 3 is present in a position of a distance of 100 m from the base station 1, even if a signal having sufficient intensity reaches the terminal 3 when one transmission beam shown in FIG. 10(a) is formed, it is likely that the signal having sufficient intensity does not reach the terminal 3 when a plurality of transmission beams shown in FIG. 10(b) are formed. This situation cannot be learned on the terminal 3 side, and thus, it is necessary to control the situation in the base station 1. That is, on the terminal 3 side, when the intensity of a received signal is insufficient and communication quality is deteriorated, it cannot be learned whether the communication quality cannot be improved unless the handover is executed or whether the communication quality can be improved by concentrating the electric power more by the antenna control on the base station 1 side. Therefore, it is desirable to perform the determination of necessity of the handover in the base station 1. The same applies in the reception by the beams. For example, reception gains are different in one beam and four beams. In view of such a situation, when detecting that transmission power applied to the beams directed to the communicating terminal 3 is equal to or larger than a threshold value, the base station 1 determines that the handover is necessary for the communicating terminal 3. The threshold value for determining whether the handover is necessary is changed on the basis of the number of antenna elements included in the base station 1 and the number of terminals 3 communicating with the base station 1. For example, the threshold value is reduced in accordance with an increase in the number of communicating terminals 3. Besides, the base station 1 can determine that the handover is necessary, when determining that reception intensities of the signals received from the terminal 3 are smaller than the threshold value.

The timing when the handover target terminal transmits the uplink signal that is to be received by the handover destination candidate base station is as follows. Usually, the terminal is given, by the communicating base station 1, the resources (the frequency and time) of the uplink signal transmission. Every time the base station 1 determines the resources of the uplink signal, the base station 1 notifies the handover destination candidate base stations of the resources through the control station 2. Alternatively, a method of giving the resources can be cyclical. When it is determined that the handover is necessary, the handover destination candidate base stations can be notified once of the reference and cycle for giving the resources through the control station 2. Alternatively, in such a system as LTE (Long Term Evolution) in which resources of an uplink control signal are cyclically allocated at a point in time when the terminal 3 starts communication, it is also conceivable to use a method of notifying the reference and the cycle of the control signal resources once when it is determined that the handover is necessary.

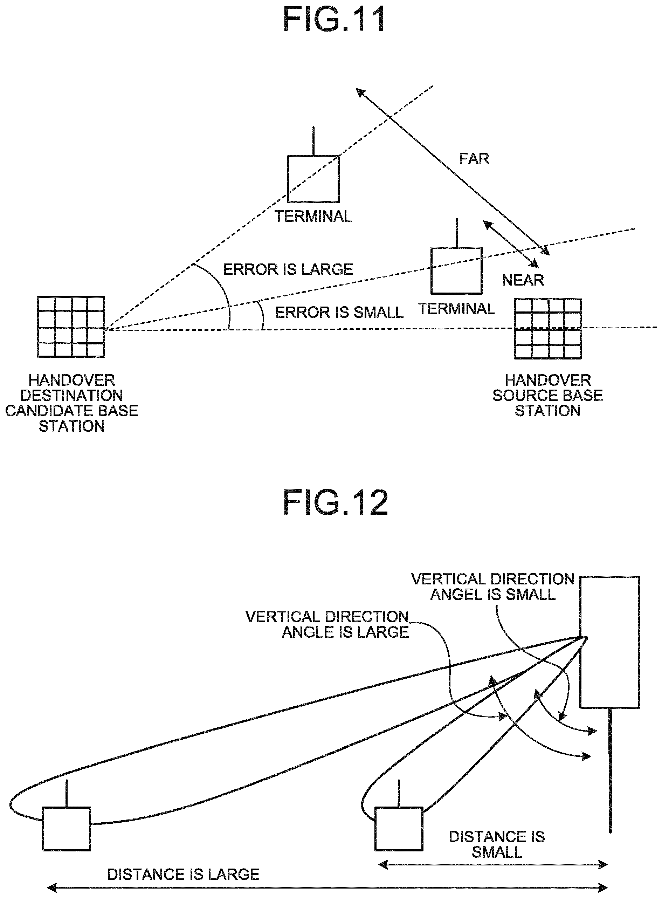

The handover destination candidate base stations determine the angle θ on the basis of the distance between the handover target terminal and the handover source base station. Specifically, the handover destination candidate base stations set the angle θ to a small value if the distance is short and set the angle θ to a large value if the distance is long. This is because, when the handover target terminal is present in a place close to the handover source base station, an error between the direction of the handover source base station and the direction of the handover target terminal is small when viewed from the handover destination candidate base stations and, when the handover target terminal is present in a place far from the handover source base station, the error between the direction of the handover source base station and the direction of the handover target terminal is large when viewed from the handover destination candidate base stations (see FIG. 11). Besides, there is also a method of always setting the angle θ to a fixed value.

The distance between the handover target terminal and the handover source base station can be calculated by a method of measurement shown in FIG. 12. Because the beams are formed in the vertical direction as well, when the distance between the handover source base station and the handover target terminal is short, a vertical direction angle of the beams decreases. When the distance is long, the vertical direction angle of the beams increases. Because the angle can be grasped by the handover source base station, it is sufficient to determine the distance according to the angle and thus determine the angle θ. Therefore, the handover source base station notifies the control station 2 of the vertical direction angle or the angle θ. The control station 2 notifies the handover destination candidate base stations of the notified vertical direction angle or the angle θ.

All of the widths of the beams can be set to fixed values or can be determined in accordance with a moving speed of the handover target terminal. This takes into account the fact that the handover target terminal moves from the time when the handover destination candidate base stations specify the beam direction during the reception of the uplink signal of the handover target terminal until the time of transmission of the downlink synchronization signal or the time of reception of the uplink synchronization signal. As the moving speed is higher, a moving direction of the handover target terminal is longer. Thus, the beam widths at the downlink synchronization signal transmission time or the uplink synchronization signal reception time are desirably wide. Conversely, when the moving speed is low, the beam widths can be narrow. Therefore, when notifying the control station 2 of the signal transmission timing of and the transmitted signal information on the handover target terminal, the handover source base station notifies information concerning the moving speed of the handover target terminal together. When the control station 2 instructs the handover destination candidate base stations to receive the uplink signal and when the control station 2 instructs the handover destination candidate base stations to perform the handover preparation, the control station 2 notifies the information concerning the moving speed together.

Note that the exchange of the information among the base stations 1 at the time of the handover is explained above as being performed through the control station 2. However, the exchange of the information is not limited to this. A configuration can be used in which the functions of the control station 2 can be imparted to any one of the base stations 1 to directly perform communication among the base stations 1. For example, a communication line for the base stations 1 to directly communicate with one another can be provided, such that the handover source base station can execute the processing performed by the control station 2, that is, the processing for instructing the handover destination candidate base stations to receive the signals from the handover target terminal and determining the handover destination base station on the basis of the signal reception results and the processing for instructing the determined handover destination base station to perform the handover preparation and instructing the handover target terminal to execute the handover.

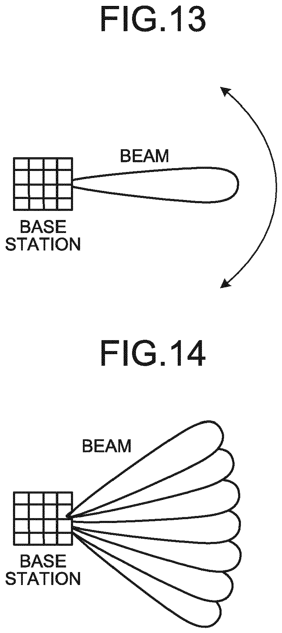

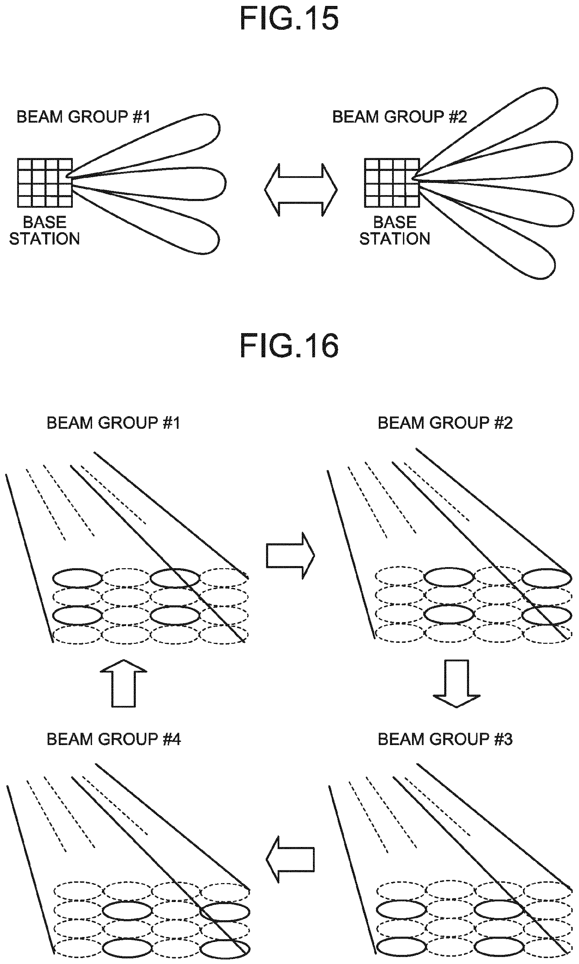

In the above explanation, when the handover destination candidate base stations receive the signals of the handover target terminal, the handover destination candidate base stations receive the signals by the method of scanning the beams shown in FIG. 13. However, the handover destination candidate base stations can receive the signals by another method (see FIG. 14). Specifically, the handover destination candidate base stations form a plurality of fixed beams and perform a signal receiving operation at the same time, and determine that a direction in which a desired signal is detected is a beam direction that is optimum for the handover target terminal. At this point, it is conceivable that the signals are received in the beams adjacent to each other and the signals enter both the reception beams and hence the direction cannot be correctly specified. To prevent this, grouping of the beams can be performed. For example, the beams adjacent to each other are grouped into different beam groups. As shown in FIG. 15, a period of time when signals are received in a beam group #1 and a period of time when signals are received in a beam group #2 are respectively provided to perform a signal receiving operation. The number of groups is not limited to two. When the beams are formed, side lobes occur. As a result, it is also likely that the beams are not affected by adjacent beams but are affected by beams adjacent to the adjacent beams. Thus, the beams are grouped into an appropriate number of beam groups taking into account characteristics of the beams. The formation of the beams on both of a horizontal plane and a vertical plane is also taken into account as an element for determining the number of groups. FIG. 16 shows a receiving operation example in beam group units at the time when the beams are formed on both of the horizontal plane and the vertical plane. In the figure, the signal reception is simultaneously performed only in the beams drawn by solid lines. The beam group in which the signal reception is performed is changed in every elapse of time.

Note that the configuration of the base station 1 in realizing the method of using a plurality of fixed beams explained above is the same as the configuration shown in FIG. 2. The control unit 15 instructs the antenna unit 11 to form a plurality of beams on the basis of the idea of beam groups, and the antenna unit 11 realizes the beam formation. The arriving-direction estimating unit 12 estimates an arriving direction from signal reception results of the beams.

When the arriving direction is estimated using a plurality of fixed beams, the widths can be determined using moving speed information on the terminal 3 when the fixed beams are formed. The determined beam widths are also applied at the downlink synchronization signal transmission time and the uplink synchronization signal reception time during the handover.

It is also conceivable to use a method of always fixing the beam widths and, instead, using a plurality of beams at the downlink synchronization signal transmission time and the uplink synchronization signal reception time. For example, when the moving speed of the handover target terminal is low, only one beam estimated during the arriving direction estimation is used. When the moving direction is high, a plurality of other beams is used in addition to the beam estimated during the arriving direction estimation. When downlink signals are transmitted in the beams, there are a method of simultaneously transmitting the downlink synchronization signals and a method of forming beam groups that do not cause interference and transmitting the downlink synchronization signals in each of the groups.

In this way, in the wireless communication system in this embodiment, when the other base stations around the base station determine that a communicating terminal needs to be handed over, the base station measures the signal intensities, the SNRs, the SINRs, and the like as the reception quality of the signals transmitted by the terminal, for which the handover is determined to be necessary, and notifies the control station or the other base stations of the measured reception results. The control station or the other base stations determine, on the basis of the notified reception results, a handover destination of the terminal. When determining that a terminal communicating with the own station needs to be handed over, the base station notifies, through the control station or directly, the peripheral base stations which are candidates of the handover destination, of the information necessary for receiving the signals transmitted by the handover target terminal which is the terminal that needs to be handed over. Specifically, this information is the timing when the handover target terminal transmits the signals, and the transmitted signal information for distinguishing the signals transmitted from the handover target terminal and the signals transmitted from the other terminals. The peripheral base stations receive the signals transmitted from the handover target terminal using a plurality of beams. The control station or the base station at the handover source determines the base station at the handover destination on the basis of the signal reception results in the peripheral base stations. In the processing for receiving the signals transmitted from the handover target terminal using the plurality of the beams, the peripheral base stations measure signals targeting the respective beams when the beams are used, and determine, on the basis of the measurement results, a beam used when the handover destination of the handover target terminal is the own station.

Consequently, while the terminal is performing communication, it is possible to select the base station at the handover destination and determine the beam used by the base station at the handover destination after the handover execution. As a result, the terminal does not need to transmit the sounding pulse during the handover execution. It is thus possible to avoid occurrence of a communication stop of the terminal.

In the wireless communication system in this embodiment, even when only one handover destination candidate base station receives the uplink signal, it is possible to specify a direction in which the terminal is located. It is unnecessary to carry position information on the terminal onto the sound pulse or other uplink signals. Therefore, many radio resources are not consumed. A problem in that radio resources to be allocated to other communicating terminals decrease does not occur.

In the wireless communication system in this embodiment, maximum transmission power that can be allocated to the communication terminal by the base station and present transmission power are compared. A result of the comparison is also used to determine whether the handover is carried out. Thus, it is possible to solve the problems in determining the handover only with information grasped by the terminal.

In the peripheral base stations, the width of the reception beam generated when the uplink signal from the handover target terminal is received is set to be the same as the beam width used during communication after the handover. A beam width of the downlink signal for the terminal executing the handover to synchronize with the base station at the handover destination is set the same as the beam width. By setting these beam widths to be the same, the processing for determining the beam width again after the handover is eliminated. It is possible to reduce time unit resumption of data communication.

The beam width is determined on the basis of the moving speed of the terminal. Time elapses from the time when the handover destination candidate base stations receive the signals of the handover target terminal and specify an arriving direction of the signals, until the handover destination candidate base stations actually carry out the handover. It is thus likely that the handover target terminal moves during the elapse of time. Therefore, by determining the beam width on the basis of the moving speed of the handover target terminal, even if the movement of the terminal due to the elapse of time occurs, it is possible to prevent the arriving direction of the terminal transmission signals from deviating from the beam that covers the specified direction. Alternatively, the number of beams at the time when the handover target terminal transmits the downlink synchronization signal for synchronizing with the base station at the handover destination is determined on the basis of the moving speed of the terminal. In this case, after the direction in which the signals from the handover target terminal arrive is specified, even if the terminal cannot receive beams in the specified direction due to the movement of the terminal, it is possible to communicate with the terminal using the other beams.

In the wireless communication system in this embodiment, the signal transmission timing by the handover target terminal for the base station to receive the uplink signal is notified by the base station at the handover source to the base station at the handover destination through the communication between the base stations or through the control station. Consequently, it is possible to simplify the apparatus configuration and reduce the time consumed for the handover processing.

When the handover destination candidate base stations form a plurality of the reception beams and receive the uplink signals from the handover target terminal, the handover destination candidate base stations perform the control to receive, at the same timing, only combinations of beams not interfering with one another and receive, at different timings, beams interfering with one another. Consequently, it is possible to secure the stable signal reception.

When the handover destination candidate base stations and the handover source base station form a plurality of the transmission beams to transmit the downlink signals to the handover target terminal, the handover destination candidate base stations and the handover source base station perform control to transmit, at the same timing, only combinations of beams not interfering with one another and transmit, at different timings, beams interfering with one another. Consequently, it is possible to secure the stable signal reception in the terminal.

The configuration explained in the embodiment indicates one example of the content of the present invention. The configuration can be combined with other publicly-known technologies. A part of the configuration can be omitted or changed in a range not departing from the present invention, which is defined by the appended claims.

### Industrial Applicability

As explained above, the present invention is useful as a base station and a control station configuring a wireless communication system and a handover method executed in the wireless communication system.

### Reference Signs List

- 1₁, 1₂, 1₃: base station
- 2: control station
- 3: terminal
- 11: antenna unit
- 11A: antenna adjusting unit
- 12: arriving-direction estimating unit
- 13: transmitting and receiving unit
- 14: modulating and demodulating unit
- 15: control unit
- 21: handover-destination determining unit
- 22: handover control unit
- 101, 201: processor
- 102, 202: memory
- 103: transmitter
- 104: receiver
- 105, 205: network interface
- 106: antenna device

## Claims

1. A base station (1₁) of a wireless communication system including a plurality of base stations (1₂, 1₃) and a control station (2) that controls the base stations, the base station comprising:
an antenna unit (11) that is configured to form a transmission beam and a reception beam;
a transmitting and receiving unit (13) that is configured to measure on receipt of an instruction from the control station when other base stations determine that a terminal (3) communicating with the other base stations around the own station needs to perform handover, signals transmitted to the other base stations by a handover target terminal (3), the handover target terminal being a terminal determined to need to carry out the handover; and
a control unit (15) that is configured to notify the control station of measurement results of the signals as information referred to when the control station determines a handover destination of the handover target terminal, wherein
the antenna unit is configured to determine a forming direction of a plurality of different reception beans,
the transmitting and receiving unit (13) is configured to measure the signals at a time when each of the different reception beams is used, and
the control unit (15) is configured to notify the control station of a measurement result indicating a best reception state among a plurality of measurement results obtained in the signal measurement by the transmitting and receiving unit.

2. The base station according to claim 1, wherein
the antenna unit (11) is configured to form, in a fixed range centering on a direction in which the other base stations are set, a plurality of reception beams having fixed widths respectively toward different directions.

3. The base station according to claim 2, wherein the fixed range is determined on a basis of distances between the other base stations and the handover target terminal.

4. The base station according to claim 2 or 3, wherein the antenna unit (11) is configured to simultaneously form the reception beams.

5. The base station according to claim 2 or 3, wherein the antenna unit (11) is configured to group the reception beams such that the reception beams interfering with one another belong to different groups and sequentially forms the reception beams at different timings for each of the groups.

6. The base station according to any one of claims 1 to 5, further comprising an arriving-direction estimating unit (12) that is configured to estimate, on a basis of a plurality of the measurement results obtained in the signal measurement by the transmitting and receiving unit, an arriving direction of a signal transmitted from the handover target terminal, wherein
the antenna unit is configured to form a plurality of beams toward the arriving direction estimated by the arriving-direction estimating unit when the antenna unit transmits a downlink synchronization signal and when the antenna receives an uplink synchronization signal.

7. The base station according to claim 6, wherein a width of the reception beam formed by the antenna unit when the transmitting and receiving unit (13) measures the signals and widths of the transmission beam and the reception beam formed by the antenna unit toward the arriving direction estimated by the arriving-direction estimating unit are set to be the same.

8. The base station according to any one of claims 1 to 7, wherein the control unit (15) is configured to determine whether a terminal communicating with the own station needs to be handed over to another base station and, when the terminal needs to be handed over, transmit, to peripheral base stations which are candidates of the handover destination, information necessary for receiving a signal transmitted by the terminal to be handed over.

9. The base station according to any one of claims 1 to 8, wherein the control unit (15) is configured to instruct, when a terminal (3) communicating with the own station needs to be handed over to another base station, one or more other peripheral base stations to receive signals transmitted by the terminal to the own station, and determine a handover destination of the terminal on a basis of measurement results of the signals in the other base stations.

10. A control station (2) that controls a base station of a wireless communication system, the control station comprising:
a handover control unit (22) that is configured to instruct, when the handover control unit is notified by a first base station (1₁) that the first base station is communicating with a handover target terminal (3) which is a terminal for which handover is necessary, one or more second base stations (1₂, 1₃) located around the first base station to receive signals transmitted by the handover target terminal to the first base station; the handover control unit is further configured to receive a notification from the one or more second base stations of a measurement result, indicating a best reception state among a plurality of measurement results based on measurements of the signals at a time when each of the reception beams of the one or more second base stations is used; and
a handover-destination determining unit (21) that is configured to determine a handover destination of the handover target terminal on a basis of measurement results of the signals in the second base stations.

11. The control station according to claim 10, wherein the handover control unit (22) is configured to acquire, from the first base station, information necessary for receiving the signals transmitted by the handover target terminal, notify the second base stations of the acquired information, and instruct the second base stations to perform reception processing in accordance with the notified information.

12. A handover method in a wireless communication system including a plurality of base stations (1₁, 1₂, 1₃) and a control station (2) that controls the base stations, the handover method comprising:
a handover detecting step in which a base station detects a handover target terminal (3) which is a terminal that needs to be handed over to another base station;
a reception instructing step in which the control station instructs base stations located around the base station which has detected the handover target terminal, to receive signals transmitted by the handover target terminal;
a signal measuring step in which the base stations instructed to receive the signals in the reception instructing step measure the signals transmitted by the handover target terminal to the base station communicating with the handover target terminal;
a handover-destination determining step in which the control station determines a handover destination of the handover target terminal on a basis of measurement results of the signals; and
a handover carrying-out step in which the control station instructs a base station at the determined handover destination to prepare for handover and instructs the handover target terminal and the base station which has detected the handover target terminal, to carry out the handover;
wherein the method further comprising:
a beam forming step in which the base stations form, in a fixed range centering on a direction in which the other base stations are set, a plurality of reception beams having fixed widths respectively toward different directions,
a measuring step in which the base stations measure the signals at a time when each of the reception beams is used, and
a controlling step in which the base stations notify the control station of a measurement result indicating a best reception state among a plurality of measurement results obtained in the signal measurement.

## Patentansprüche

1. Basisstation (1₁) eines drahtlosen Kommunikationssystems, aufweisend eine Vielzahl von Basisstationen (1₂, 1₃) und eine Steuerstation (2), die die Basisstationen steuert, wobei die Basisstation umfasst:
eine Antenneneinheit (11), die konfiguriert ist, einen Sendestrahl und einen Empfangsstrahl zu bilden;
eine Sende- und Empfangseinheit (13), die konfiguriert ist, auf Empfang einer Anweisung von der Steuerstation, wenn andere Basistationen bestimmen, dass ein Endgerät (3), kommunizierend mit den anderen Basisstationen in der Umgebung der eigenen Station, Übergabe durchführen muss, Signale zu messen, die durch ein Übergabezielendgerät (3) an die anderen Basisstationen gesendet werden, wobei das Übergabezielendgerät ein Endgerät ist, für das bestimmt ist, dass es die Übergabe durchführen muss; und
eine Steuereinheit (15), die konfiguriert ist, der Steuerstation Messungsergebnisse der Signale mitzuteilen als Informationen, auf die sich bezogen wird, wenn die Steuerstation ein Übergabeziel des Übergabezielendgeräts bestimmt, wobei
die Antenneneinheit konfiguriert ist, eine Bildungsrichtung von einer Vielzahl von verschiedenen Sendestrahlen zu bestimmen,
die Sende- und Empfangseinheit (13) konfiguriert ist, die Signale zu einem Zeitpunkt zu messen, zu dem jeder der verschiedenen Empfangsstrahlen verwendet wird, und
die Steuereinheit (15) konfiguriert ist, der Steuerstation ein Messungsergebnis mitzuteilen, anzeigend einen besten Empfangszustand unter einer Vielzahl von Messungsergebnissen, die bei der Signalmessung durch die Sende- und Empfangseinheit erhalten wurden.

2. Basisstation nach Anspruch 1, wobei
die Antenneneinheit (11) konfiguriert ist, in einem festen Bereich, zentriert auf eine Richtung, in der die anderen Basisstationen eingerichtet sind, eine Vielzahl von Empfangsstrahlen zu bilden, die feste Breiten entsprechend in verschiedene Richtungen haben.

3. Basisstation nach Anspruch 2, wobei der feste Bereich bestimmt wird auf einer Grundlage von Abständen zwischen den anderen Basisstationen und dem Übergabezielendgerät.

4. Basisstation nach Anspruch 2 oder 3, wobei die Antenneneinheit (11) konfiguriert ist, die Empfangsstrahlen gleichzeitig zu bilden.

5. Basisstation nach Anspruch 2 oder 3, wobei die Antenneneinheit (11) konfiguriert ist, die Empfangsstrahlen derart zu gruppieren, dass die miteinander interferierenden Empfangsstrahlen zu verschiedenen Gruppen gehören, und die Empfangsstrahlen zu unterschiedlichen Zeitpunkten für jede der Gruppen sequentiell bildet.

6. Basisstation nach einem der Ansprüche 1 bis 5, ferner umfassend eine Eintreffrichtung-Schätzeinheit (12), die konfiguriert ist, auf einer Grundlage von einer Vielzahl der Messungsergebnisse, die bei der Signalmessung durch die Sende- und Empfangseinheit erhalten werden, eine Eintreffrichtung eines durch das Übergabezielendgerät gesendeten Signals zu schätzen, wobei
die Antenneneinheit konfiguriert ist, eine Vielzahl von Strahlen in die durch die Eintreffrichtung-Schätzeinheit geschätzte Eintreffrichtung zu bilden, wenn die Antenneneinheit ein Downlink-Synchronisationssignal sendet, und wenn die Antenne ein Uplink-Synchronisationssignal empfängt.

7. Basisstation nach Anspruch 6, wobei eine Breite des Empfangsstrahls, der durch die Antenneneinheit gebildet wird, wenn die Sende- und Empfangseinheit (13) die Signale misst, und Breiten des Sendestrahls und des Empfangsstrahls, die durch die Antenneneinheit in der Eintreffrichtung, die durch die Eintreffrichtung-Schätzeinheit geschätzt wird, gebildet werden, gleich eingestellt sind.

8. Basisstation nach einem der Ansprüche 1 bis 7, wobei die Steuereinheit (15) konfiguriert ist, zu bestimmen, ob ein mit der eigenen Station kommunizierendes Endgerät an eine andere Basisstation übergeben werden muss, und, wenn das Endgerät übergeben werden muss, an periphere Basisstationen, die Kandidaten des Übergabeziels sind, Informationen zu senden, die für das Empfangen eines Signals, das durch das zu übergebende Endgerät gesendet wird, notwendig sind,

9. Basisstation nach einem der Ansprüche 1 bis 8, wobei die Steuereinheit (15) konfiguriert ist, wenn ein mit der eigenen Station kommunizierendes Endgerät (3) an eine andere Basisstation übergeben werden muss, eine oder mehrere andere periphere Basisstationen anzuweisen, Signale zu empfangen, die durch das Endgerät an die eigene Station übertragen werden, und ein Übergabeziel des Endgeräts zu bestimmen auf einer Grundlage von Messungsergebnissen der Signale in den anderen Basisstationen.

10. Steuerstation (2), die eine Basisstation eines drahtlosen Kommunikationssystems steuert, wobei die Steuerstation umfasst:
eine Übergabesteuereinheit (22), die konfiguriert ist, wenn die Übergabesteuereinheit durch eine erste Basisstation (1₁) darüber benachrichtigt wird, dass die erste Basisstation mit einem Übergabezielendgerät (3) kommuniziert, das ein Endgerät ist, für das eine Übergabe erforderlich ist, eine oder mehrere zweite Basisstationen (1₂, 1₃), die in der Umgebung der ersten Basisstation angeordnet sind, anzuweisen, durch das Übergabezielendgerät an die erste Basisstation gesendete Signale zu empfangen; die Übergabesteuereinheit ferner konfiguriert ist, eine Benachrichtigung von der einen oder mehreren zweiten Basisstationen über ein Messungsergebnis, anzeigend einen besten Empfangszustand unter einer Vielzahl von Messungsergebnissen zu empfangen auf Grundlage von Messungen der Signale zu einem Zeitpunkt, zu dem jeder der Empfangsstrahlen von der einen oder den mehreren zweiten Basisstationen verwendet wird; und
eine Übergabezielbestimmungseinheit (21), die konfiguriert ist, ein Übergabeziel des Übergabezielendgeräts zu bestimmen auf einer Grundlage von Messungsergebnissen der Signale in den zweiten Basisstationen.

11. Steuerstation nach Anspruch 10, wobei die Übergabesteuereinheit (22) konfiguriert ist, von der ersten Basisstation Informationen zu erwerben, die für das Empfangen der durch das Übergabezielendgerät gesendeten Signale erforderlich sind, die zweiten Basisstationen über die erworbenen Informationen zu benachrichtigen und die zweiten Basisstationen anzuweisen, eine Empfangsverarbeitung gemäß den mitgeteilten Informationen durchzuführen.

12. Übergabeverfahren in einem drahtlosen Kommunikationssystem, aufweisend eine Vielzahl von Basisstationen (1₁, 1₂, 1₃) und eine Steuerstation (2), die die Basisstationen steuert, wobei das Übergabeverfahren umfasst:
einen Übergabedetektionsschritt, bei dem eine Basisstation ein Übergabezielendgerät (3), das ein Endgerät ist, das an eine andere Basisstation übergeben werden muss, detektiert;
einen Empfangsanweisungsschritt, bei dem die Steuerstation die Basisstationen, die in der Umgebung der Basisstation angeordnet sind, die das Übergabezielendgerät detektiert hat, anweist, Signale zu empfangen, die durch das Übergabezielendgerät gesendet werden;
einen Signalmessschritt, bei dem die Basisstationen, die angewiesen sind, die Signale in dem Empfangsanweisungsschritt zu empfangen, die Signale messen, die durch das Übergabezielendgerät an die Basisstation gesendet werden, die mit dem Übergabezielendgerät kommuniziert;
einen Übergabeziel-Bestimmungsschritt, bei dem die Steuerstation ein Übergabeziel des Übergabezielendgeräts bestimmt auf einer Grundlage von Messungsergebnissen der Signale; und
einen Übergabedurchführungsschritt, bei dem die Steuerstation eine Basisstation an dem bestimmten Übergabeziel anweist, sich auf Übergabe vorzubereiten, und das Übergabezielendgerät und die Basisstation, die das Übergabezielendgerät detektiert hat, anweist, die Übergabe durchzuführen;
wobei das Verfahren ferner umfasst:
einen Strahlbildungsschritt, bei dem die Basisstationen in einem festen Bereich, zentriert auf eine Richtung, in der die anderen Basisstationen eingerichtet sind, eine Vielzahl von Empfangsstrahlen bilden, die feste Breiten entsprechend in verschiedene Richtungen haben,
einen Messschritt, bei dem die Basisstationen die Signale zu einem Zeitpunkt messen, zu dem jeder der Empfangsstrahlen verwendet wird, und
einen Steuerungsschritt, bei dem die Basisstationen die Steuerstation über ein Messungsergebnis benachrichtigen, anzeigend einen besten Empfangszustand, aus einer Vielzahl von Messungsergebnissen, die bei der Signalmessung erhalten werden.

## Revendications

1. Station de base (1₁) d'un système de communication sans fil qui comprend une pluralité de stations de base (1₂, 1₃) et une station de commande (2) qui commande les stations de base, la station de base comprenant :
une unité antenne (11) qui est configurée de façon à former un faisceau d'émission et un faisceau de réception ;
une unité d'émission et de réception (13) qui est configurée de façon à mesurer, à la réception d'une instruction en provenance de la station de commande, lorsque d'autres stations de base déterminent qu'un terminal (3) qui communique avec les autres stations de base autour de la propre station, nécessite l'exécution d'un transfert intercellulaire, les signaux émis vers les autres stations de base par un terminal cible de transfert intercellulaire (3), le terminal cible de transfert intercellulaire étant un terminal que l'on a déterminé comme nécessitant l'exécution d'un transfert intercellulaire ; et
une unité de commande (15) qui est configurée de façon à notifier à la station de commande les résultats de mesure des signaux en tant qu'informations correspondantes lorsque la station de commande détermine une destination de transfert intercellulaire du terminal cible de transfert intercellulaire, dans laquelle :
l'unité antenne est configurée de façon à déterminer une direction de formation d'une pluralité de faisceaux de réception différents ;
l'unité d'émission et de réception (13) est configurée de façon à mesurer les signaux à un instant où chacun des différents faisceaux de réception est utilisé ; et
l'unité de commande (15) est configurée de façon à notifier à la station de commande un résultat de mesure qui indique le meilleur état de réception parmi une pluralité de résultats de mesure obtenus dans la mesure du signal par l'unité d'émission et de réception.

2. Station de base selon la revendication 1, dans laquelle :
l'unité antenne (11) est configurée de façon à former, dans une plage fixe centrée sur une direction dans laquelle se situent les autres stations de base, une pluralité de faisceaux de réception qui présentent des largeurs fixes respectivement vers différentes directions.

3. Station de base selon la revendication 2, dans laquelle :
la plage fixe est déterminée sur la base des distances entre les autres stations de base et le terminal cible de transfert intercellulaire.

4. Station de base selon la revendication 2 ou la revendication 3, dans laquelle :
l'unité antenne (11) est configurée de façon à former de manière simultanée les faisceaux de réception.

5. Station de base selon la revendication 2 ou la revendication 3, dans laquelle :
l'unité antenne (11) est configurée de façon à grouper les faisceaux de réception de telle sorte que les faisceaux de réception qui interfèrent les uns avec les autres, appartiennent à des groupes différents, et forment de manière séquentielle les faisceaux de réception à différentes synchronisations pour chacun des groupes.

6. Station de base selon l'une quelconque des revendications 1 à 5, comprenant en outre une unité d'estimation de la direction d'arrivée (12) qui est configurée de façon à estimer, sur la base d'une pluralité de résultats de mesure obtenus dans la mesure du signal par l'unité d'émission et de réception, la direction d'arrivée d'un signal émis par le terminal cible de transfert intercellulaire, dans laquelle :
l'unité antenne est configurée de façon à former une pluralité de faisceaux vers la direction d'arrivée estimée par l'unité d'estimation de la direction d'arrivée, lorsque l'unité antenne émet un signal de synchronisation de liaison descendante, et lorsque l'antenne reçoit un signal de synchronisation de liaison montante.

7. Station de base selon la revendication 6, dans laquelle :
la largeur du faisceau de réception formé par l'unité antenne lorsque l'unité d'émission et de réception (13) mesure les signaux, et les largeurs du faisceau d'émission et du faisceau de réception formés par l'unité antenne vers la direction d'arrivée estimée par l'unité d'estimation de la direction d'arrivée, sont fixées de façon à être identiques.

8. Station de base selon l'une quelconque des revendications 1 à 7, dans laquelle :
l'unité de commande (15) est configurée de façon à déterminer si un terminal qui communique avec la propre station nécessite un transfert intercellulaire vers une autre station de base et, lorsque le terminal nécessite un transfert intercellulaire, émettre, vers des stations de base périphériques qui sont candidates de la destination de transfert intercellulaire, les informations nécessaires à la réception d'un signal émis par le terminal qui nécessite un transfert intercellulaire.

9. Station de base selon l'une quelconque des revendications 1 à 8, dans laquelle :
l'unité de commande (15) est configurée de façon à charger une ou plusieurs autres stations de base périphériques de recevoir les signaux émis par le terminal vers la propre station, quand un terminal (3) qui communique avec la propre station nécessite un transfert intercellulaire vers une autre station de base, et de déterminer une destination de transfert intercellulaire du terminal sur la base des résultats de mesure des signaux dans les autres stations de base.

10. Station de commande (2) qui commande une station de base d'un système de communication sans fil, la station de commande comprenant :
une unité de commande de transfert intercellulaire (22) qui est configurée de façon à charger, lorsque l'unité de commande de transfert intercellulaire est notifiée par une première station de base (1₁), que la première station de base communique avec un terminal cible de transfert intercellulaire (3) qui est un terminal pour lequel un transfert intercellulaire est nécessaire, une ou plusieurs deuxièmes stations de base (1₂, 1₃) qui se situent autour de la première station de base, de recevoir les signaux émis par le terminal cible de transfert intercellulaire vers la première station de base ;
l'unité de commande de transfert intercellulaire est configurée en outre de façon à recevoir, en provenance de la ou des deuxièmes stations de base, une notification d'un résultat de mesure qui indique le meilleur état de réception parmi une pluralité de résultats de mesure sur la base des mesures des signaux à un instant où chacun des faisceaux de réception de la ou des stations de seconde base, est utilisé ; et
une unité de détermination de la destination d'un transfert intercellulaire (21), qui est configurée de façon à déterminer une destination d'un transfert intercellulaire du terminal cible de transfert intercellulaire, sur la base des résultats de mesure des signaux dans les deuxièmes stations de base.

11. Station de commande selon la revendication 10, dans laquelle :
l'unité de commande de transfert intercellulaire (22) est configurée de façon à acquérir, à partir de la première station de base, les informations nécessaires à la réception des signaux émis par le terminal cible de transfert intercellulaire, à notifier aux deuxièmes stations de base, les informations acquises, et à charger les deuxièmes stations de base d'exécuter un traitement de réception selon les informations notifiées.

12. Procédé de transfert intercellulaire dans un système de communication sans fil qui comprend une pluralité de stations de base (1₁, 1₂, 1₃) et une station de commande (2) qui commande les stations de base, le procédé de transfert intercellulaire comprenant :
une étape de détection d'un transfert intercellulaire, dans laquelle une station de base détecte un terminal cible de transfert intercellulaire (3) qui est un terminal qui nécessite un transfert intercellulaire vers une autre station de base ;
une étape de demande de réception, dans laquelle la station de commande charge les stations de base qui se situent autour de la station de base qui a détecté le terminal cible de transfert intercellulaire, de recevoir les signaux émis par le terminal cible de transfert intercellulaire ;
une étape de mesure de signal, dans laquelle les stations de base chargées de recevoir les signaux dans l'étape de demande de réception, mesurent les signaux émis par le terminal cible de transfert intercellulaire vers la station de base qui communique avec le terminal cible de transfert intercellulaire ;
une étape de détermination d'une destination de transfert intercellulaire, dans laquelle la station de commande détermine une destination de transfert intercellulaire du terminal cible de transfert intercellulaire sur la base des résultats de mesure des signaux ; et
une étape d'exécution de transfert intercellulaire, dans laquelle la station de commande charge une station de base, au niveau de la destination déterminée du transfert intercellulaire, de se préparer à un transfert intercellulaire, et charge le terminal cible de transfert intercellulaire et la station de base qui a détecté le terminal cible de transfert intercellulaire, d'exécuter le transfert intercellulaire ;
dans lequel le procédé comprend en outre :
une étape de formation de faisceau, dans laquelle les stations de base forment, dans une plage fixe centrée sur une direction dans laquelle se situent les autres stations de base, une pluralité de faisceaux de réception qui présentent des largeurs fixé respectivement vers différentes directions ;
une étape de mesure, dans laquelle les stations de base mesurent les signaux à un instant où chacun des faisceaux de réception est utilisé ; et
une étape de commande, dans laquelle les stations de base notifient à la station de commande, un résultat de mesure qui indique le meilleur état de réception parmi une pluralité de résultats de mesure obtenus dans la mesure du signal.
